Europäisches Patentamt

European Patent Office

Office européen des brevets

(19)

(11) EP 0 694 379 A2

(12) EUROPÄISCHE PATENTANMELDUNG

(43) Veröffentlichungstag:
31.01.1996 Patentblatt 1996/05

(51) Int. Cl.[6]: **B29C 59/14**
// B29K23:00

(21) Anmeldenummer: 95111154.1

(22) Anmeldetag: 17.07.1995

(84) Benannte Vertragsstaaten:
BE DE ES GB IT

(30) Priorität: 28.07.1994 DE 4426754

(71) Anmelder: WOLFF WALSRODE AG
D-29655 Walsrode (DE)

(72) Erfinder:
• Krallmann, Anton
  D-29683 Fallingborstel (DE)
• Reiners, Ulrich, Dr.
  D-29643 Neuenkirchen (DE)
• Gernot, Thomas, Dr.
  D-29664 Walsrode (DE)

(74) Vertreter: Braun, Rolf, Dr. et al
D-51368 Leverkusen (DE)

(54) **Verfahren zur Plasmavorbehandlung von Polyolefinfolien**

(57) Die vorliegende Erfindung betrifft ein Verfahren zur Herstellung von hochpolaren, kratzunempfindlichen Polyolefinfolien mittels Plasmavorbehandlung, die mindestens monoaxial gereckt sind, dadurch gekennzeichnet, daß als Kathodenmaterial Titan eingesetzt wird, daß die angelegte Spannung 400 bis 800 V, vorzugsweise 500 bis 700 V, beträgt, wobei die Spannung eine Wechselspannung oder eine pulsierende Gleichspannung ist, daß die Behandlung der Folie in eine Sauerstoffatmosphäre oder nicht-metalloxidhaltigen Atmosphäre, sowie deren Mischungen mit Edelgasen, bei Drücken von 0,01 bis 0,5, vorzugsweise 0,03 bis 0,42 mbar erfolgt.

EP 0 694 379 A2

Printed by Rank Xerox (UK) Business Services
2.9.7/3.4

**Beschreibung**

Die vorliegende Erfindung betrifft ein Verfahren zur Plasmavorbehandlung von Polyolefinfolien nach dem Niederdruckverfahren, insbesondere von kratzunempfindlichen BOPP-Folien (biaxial orientierte Polypropylenfolien).

In der Literatur sind eine Vielzahl von Veröffentlichungen zum Niederdruckplasma bekannt. In der deutschen Patentschrift 997 093 wird ein Verfahren zur Behandlung von Polypropylen in einer elektrischen Entladung bei einem Druck von bis zu 1,3 mbar beschrieben, um bei einer anschließenden Propfpolymerisation die Einfärbbarkeit des Polymeren zu verbessern.

Die US-A-374 091 beschreibt ein Verfahren zur Behandlung von Folien in einer Atmosphäre aus z.B. Acrylsäure und Stickstoff. Als Prozeßparameter wird ein Abstand zwischen Elektrode und Polymer von 0,25 bis 3,2 mm angegeben. Die Energiedichte liegt in der Größenordnung von 0,016 Ws/cm$^2$.

Aus US-A-3 686 018 ist ein Verfahren zur Vorbehandlung organischer Substrate in einem Niederdruckplasma und anschließender Behandlung des vorbehandelten Substrates in einer oxidierenden Gasatmosphäre zur Verringerung der Gaspermeation durch eine anschließend aufgedampfte Metallschicht bekannt. Die Vorbehandlung erfolgt bei einem Druck von 0,013 bis 1,3 mbar und bei einem Abstand von 50 mm zwischen Elektrode und Substrat.

In EP 0 436 918 wird eine Plasmavorbehandlung von Polyolefinfolien beschrieben, bei der bestimmte Parameter wie Energiedichte, Partialdruck, Abstand und Temperatur eingehalten werden sollen.

Gegenstand der vorliegenden Erfindung ist ein Verfahren zur Herstellung von kratzunempfindlichen, mindestens monoaxial gereckten Polyolefinfolien durch Plasmavorbehandlung, dadurch gekennzeichnet, daß als Kathodenmaterial Titan eingesetzt wird, daß die angelegte Spannung 400 bis 800 V, vorzugsweise 500 bis 700 V, beträgt, wobei die Spannung eine Wechselspannung oder eine pulsierende Gleichspannung ist und die Behandlung der Folie in einer Sauerstoff- und/oder nicht-metalloxidhaltigen Atmosphäre bei Drücken von 0,03 bis 0,42 mbar erfolgt.

Durch die erfindungsgemäße Art der Vorbehandlung wird die Haftung von Polyolefinfolien zu Klebern (lösemittelhaltige und wäßrige Dispersionskleber) und zu wäßrigen Druckfarben erheblich verbessert.

Die hierfür eingesetzten Polyolefinfolien können ein- oder mehrschichtig aufgebaut sein. Für gereckte (insbesondere biaxial gereckt) Polyolefinfolien wird vorzugsweise ein isotaktisches Polypropylen eingesetzt mit einen n-Heptan-löslichen Anteil von 2 % bis 6 Gew.-%).

Das Polypropylen hat eine Dichte von 0,9 bis 0,91 g/cm$^3$ und einen Schmelzindex von 2 bis 5 g/10 min. (230°C/21,6 N DIN 53735). Das Polymer wird mit Hilfe eines Extruders thermoplastisch durch eine Breitschlitzdüse auf eine Abkühlwalze extrudiert, dort verfestigt, über Aufheizwalzen wieder erwärmt und in Maschinenrichtung um den Faktor 5 verstreckt. Anschließend wird der längsverstreckte Film in Querrichtung bei einer Temperatur von 160°C mit Hilfe eines Streckrahmens um den Faktor 10 verstreckt. Nach der Streckung der Folie in Querrichtung schließt sich eine abschließende Fixierstufe an. Dabei wird die Folie bei einer Temperatur, die 5 bis 10°C unterhalb der Strecktemperatur liegt, im Streckrahmen für die Zeit von 0,5 bis 10 sec. weitergeführt.

Daneben sind auch mehrschichtige, siegelfähige Folien für eine Plasmavorbehandlung hervorragend geeignet. Die mehrschichtigen, siegelfähigen Folien sind in der Regel symmetrisch aufgebaut (ABA-Struktur), wobei es sich bei der B-Schicht um das oben beschriebene Polypropylen handelt. Die A-Schichten mit einer Dicke von ca. 1 µm bestehen aus statistischen Copolymerisaten, aus Propylen- und Ethylenbausteinen mit einem Ethylengehalt von 4 Gew.-% und einem Propylengehalt von 96 Gew.-% oder aus Copolymerisaten aus Propylen- und Buten-1-bausteinen oder aus Copolymerisaten aus Ethylen- und Buten-1-bausteinen oder aus Mischungen hiervon, wobei der Anteil des Propylens in der Mischung größer als 80 Gew.-% ist.

Auch können opake, mehrschichtige Folien einer solchen Vorbehandlung unterzogen werden. Die Basisschicht kann zum Beispiel aus vorzugsweise 6 bis 14 Gew-.% mit dem Polypropylen unverträglichen Additiv als anorganisches Material Kalziumcarbonat, Siliziumdioxid und/oder Titandioxid und als organisches Material Polyamid 6, Polybutylenterephthalat und Polytetrafluorethylen oder Mischungen hiervon enthalten. Unverträglichkeit bedeutet dabei, daß diese organischen Additive einen anderen Schmelzpunkt und/oder eine andere Reckbarkeit als das Polypropylen aufweisen, so daß es unter geeigneten Voraussetzungen beim biaxialen Orientierungsprozeß der Mehrschichtfolien zum Aufreißen der Polymermatrix und damit zu Vakuolenbildung kommt. Durch das Auftreten von Vakuolen in der Folien wird der opake Charakter einer solchen Folien erzeugt.

Die erfindungsgemäß behandelten Mehrschichtfolien können auf einer Seite eine Thermokaschierschicht aus niedrigschmelzenden Polymeren tragen. Durch Zufuhr von Wärme und unter Druck kann eine solche Folie zunächst gegen andere Substrate heißkaschiert werden und anschließend mit der erfindungsgemäß vorbehandelten Seite verklebt und bedruckt werden.

Die Ausrüstung der Schichten der Folien mit üblichen Additiven und Hilfsmitteln wie zum Beispiel Gleitmitteln, Antiblockmitteln und Antistatika in üblichen Mengen, ist möglich.

Die für eine Plasmavorbehandlung geeigneten Folien können nach üblichen Verfahren wie Laminierung, Beschichtung oder Schmelz(co)extrusion produziert werden. Sie werden vorzugsweise mindestens monoaxial, bevorzugt biaxial gereckt.

In Mehrschichtfolien sollten die Polypropylenbasisfolieschicht vorzugsweise eine Dicke von 12 µm bis 50 µm und die heißsiegelbaren Schichten vorzugsweise eine Dicke von 0,8 bis 2 µm, besonders bevorzugt um 1 µm, aufweisen.

Die Polyolefinfolie, bevorzugt Polypropylenfolie, ist vorzugsweise auf eine Spule aufgewickelt und wird über eine Kühlwalze auf die Aufwickelspule geführt, wobei sich diese Anordnung in einer Vakuumkammer befindet.

Die Kathode(n) sind um die Kühlwalze angeordnet, wobei in diesem Bereich das Prozeßgas (Sauerstoff) zudosiert wird.

Die Anregung des Plasmas geschieht durch ein elektrisches Feld mit gleichgerichteter Wechselspannung, wobei ein Spannungsbereich von 300 bis 2 000 V eingestellt werden kann. Die Polyolefinfolie befindet sich in einem bestimmten Abstand zu den Kathoden, vorzugsweise etwa 20 bis 100 mm.

Die Kathode kann in einfacher Form oder auch als Magnetronkathode ausgeführt sein. Typische Prozeßdrücke sind solche zwischen 0,01 und 0,5 mbar. Als Prozeßgase wurden bevorzugt Sauerstoff, Ozon oder nichtmetalloxidhaltige Gase wie zum Beispiel $O_2$, $H_2O_2$, $H_2O$, $N_2O$ und $NO_2$ sowie deren Mischungen mit Edelgasen wie He, Ne, Ar, Kr und Xe benutzt.

Überraschenderweise hat sich gezeigt, daß eine Plasmavorbehandlung nur in einem sehr kleinen Verfahrensparameterbereich sinnvoll ist. Wird dieser Bereich bei der Plasmavorbehandlung von BOPP-Folien nicht eingehalten, so kann zwar eine gute Verbundhaftung zu Klebern erreicht werden, die aber durch eine große Empfindlichkeit der Folienoberfläche gegenüber Verkratzungen erkauft werden muß.

Folgende Verfahrensparameter sind bei der Plasmavorbehandlung von Bedeutung: angelegte Spannung, geflos- ener Strom, Geschwindigkeit der Folienbahn, Kathodenfläche, Druck bei der Plasmavorbehandlung und Art des verwendeten Gases.

Für die Beurteilung der Wirkung der Plasmavorbehandlung auf den BOPP-Folien wurden nachfolgende Kriterien berücksichtigt. Verklebbarkeit der Folie mit handelsüblichen Klebern, Bedruckbarkeit mit handelsüblichen Druckfarben und Empfindlichkeit der Folienoberfläche gegenüber mechanischen Beanspruchungen und damit Verlust der optischen Güte der Folie. (Die Plasmavorbehandlung darf die Empfindlichkeit gegenüber mechanischer Beanspruchung - zum Beispiel Gleiten der Oberfläche auf verschiedenen Teilen der Verarbeitungsmaschine und Stapeln der fertigen Packungen oder Reiben der Packungen gegeneinander - nicht beeinflussen. Wenn diese Folie bei mechanischer Beanspruchung ihre optischen Eigenschaften wie Trübung und Glanz verliert, ist sie für die Veredlung unbrauchbar geworden).

Aus der großen Zahl der oben genannten Parameter und deren Variationsmöglichkeiten wurden überraschenderweise ein sehr kleiner Arbeitsbereich gefunden, in dem die Plasmavorbehandlung ganz bevorzugt für BOPP-Folien genutzt werden kann.

Entscheidend für eine besonders gute Plasmavorbehandlung sind folgende Einstellungen: Die angelegte Spannung muß 500 bis 700 V betragen. Die Energiedichte, die als eingegangene elektrische Leistung aus der Breite der Kathode und der Geschwindigkeit der Folie berechnet wird

$$P_{spez.} = \frac{U \cdot I}{L \cdot v} = \frac{[V \cdot A]}{[m.m/s]} = \frac{[Ws]}{[m^2]}$$

sollte vorzugsweise 0,1 bis 1,5 Ws/cm$^2$ betragen.

Für die Berechnung der Energiedichte gehen also folgende Werte ein: angelegte Spannung U, geflossener Strom I, Breite der Kathode L und Bahngeschwindigkeit der Folie v.

Kleine Werte für die Energiedichte führen zu keiner Verbesserung der Haftung der Polyolefinfolien mit Klebern bzw. Druckfarben. Andererseits ist eine Energiedichte größer als 1,5 Ws/cm$^2$ im allgemeinen nicht günstig, weil in diesem Fall die Oberfläche der Polyolefinfolie irreversibel geschädigt wird, indem in einer oberflächennahen Schicht die Bindung zwischen den olefinischen Kettengliedern aufgebrochen werden, so daß eine Grenzschicht mit nahezu oligomeren Kettengliedern geschaffen wird, die eine schlechte Haftung bewirkt. Wird bei höheren Spannungen die Plasmavorbehandlung durchgeführt, so kann zwar bei kleineren Werten für die spezifische Leistung gute Verbundhaftung zum Kleber erreicht werden, aber diese muß mit einer hohen Empfindlichkeit der Oberfläche der Folie gegenüber mechanischer Beanspruchung erkauft werden.. Diese Empfindlichkeit bedeutet eine leichte Verkratzung der Oberfläche der Folie, die eine deutliche Glanzverminderung und einer Zunahme der Trübung bewirkt.

Eine Quantifizierung für die Empfindlichkeit der Folienoberfläche kann durch die Messung der Trübungsdifferenz vor und nach mechanischer Beanspruchung ermittelt werden.

Des weiteren ist es wichtig, daß die Temperaturen der Folie während der Behandlung 30°C nicht übersteigen, vorzugsweise im Bereich von 2°C bis 10°C liegen, da ansonsten die Haftung in einem nachfolgend herzustellenden Verbund gering bleibt.

Nachdem die Folie in erfindungsgemäßer Weise vorbehandelt worden ist, wird sie der Vakuumanlage entnommen und kann zu einem Verbund weiterverarbeitet werden. Dies kann zum Beispiel dadurch geschehen, daß diese Folie auf Papier und Karton durch Verkleben aufkaschiert wird oder eine Metallschicht oder eine Schicht aus anorganischen Oxiden aufgebracht wird, zum Beispiel durch Aufdampfen. Solche Verbunde werden unter anderem in der Verpackungsindustrie eingesetzt.

Darüber hinaus eignet sich die erfindungsgemäß vorbehandelte Folie in hervorragender Weise zum Bedrucken mit schwierigen Druckfarbensystemen - zum Beispiel solchen auf wäßriger Basis. Diese Druckfarben werden aus Umweltschutzgründen im Verpackungsbereich zunehmend eingesetzt.

In einer besonders bevorzugten Ausführungsform werden biaxial gereckte, einseitig Corona-vorbehandelte Polypropylenfolien auf der nicht Corona-vorbehandelten Folienseite erfindungsgemäß vorbehandelt. Die Folie wird auf der nicht erfindungsgemäß vorbehandelten Seite nach üblichem Verfahren gegen Vorderseite des Kartons vollflächig kaschiert. Dieser Verbund aus Papier und BOPP-Folie wird so geformt, daß eine Faltschachtel entsteht, wobei die erfindungsgemäß vorbehandelte Folienseite mit der Rückseite des Kartons verliebt wird. Der Verbund eignet sich wegen der hohen Klebefreudigkeit der erfindungsgemäß vorbehandelten Seite für die Verarbeitung in schnellaufenden Faltschachtelklebemaschinen.

Nachfolgend werden die verwendeten Prüfungsmethoden beschrieben.

Die Haftungstests bezüglich der Verklebung für diese Folie werden folgendermaßen durchgeführt:

Auf die Oberfläche der erfindungsgemäß behandelten Folie wird der Kleber (Dispersionstyp von Firma Henkel, mit der Bezeichnung Adhesin A 7250) mit einem Applikator aufgetragen. Der Applikator ist quaderförmig, besteht aus VA-Stahl und besitzt eine 4 mm Bohrung, durch die der Kleber auf die Folie gelangt. Die Dicke des Klebstoffilms wird über die Spaltbreite von 0,1 mm geregelt. Nach kurzer offener Wartezeit wird ein Zellstoffkarton (Fa. Igesund, Papiertyp: Inwercoate 250 g/m²) mit der Rückseite und ohne Druck auf die Leimnaht gelegt. Die Klebung wird durch Pressen mit zwei Glasplatten bei einem Druck von 10 g/cm² für 30 sec. fertiggestellt.

Die Prüflinge sind anschließend über 24 h und ohne Druck bei Raumtemperatur zu lagern und dann zu trennen. Nach dem Aussehen des Trennbildes ist die Verliebbarkeit einzustufen. Die Trennung des Verbundes aus Folie und Zellstoffkarton erfolgt in der Weise, daß die Folie bei einem Winkel zum Karton von 90° abgezogen wird.

Wenn an mehr als 95 % der Folienoberfläche, die mit Kleber versehen worden ist, nach dem Trennvorgang Zellstoffkarton oder Teile davon haften, wird diese Haftung mit sehr gut bezeichnet. Die Verbundhaftung zwischen Folien und Karton ist dann größer als die Eigenfestigkeit des Kartons.

Hier sollen folgende Beurteilungen benutzt werden:

| Anteil der mit Klebstoff versehenen Fläche | Beurteilung | Codierung |
|---|---|---|
| > 95 % | sehr gut | ++ |
| > 75 % | gut | + |
| > 20 % | mäßig | o |
| < 20 % | unzureichend | - |

Die Kratzempfindlichkeit einer transparenten Folie wird in folgender Weise gemessen: Die Folienoberfläche wird unter spezifischen Bedingungen mit Siliziumcarbidpulver mechanisch behandelt. Die Siliziumcarbidkörnchen (Typ Makrokorn® E 120) fallen aus bestimmter Höhe unter einem bestimmten Winkel auf die Oberfläche der Folie. Die Differenz der Trübungswerte (bestimmt nach ASTM 1003) vor und nach Behandlung ist die Maßzahl für die Kratzempfindlichkeit.

Folgende Bewertungsmaßstäbe sollen herangezogen werden:

| Trübungsdifferenz [%] | Bewertung | verwendete Codierung |
|---|---|---|
| $0 \leqq 2$ | sehr gut | ++ |
| $2 \leqq 4$ | gut | + |
| $4 \leqq 10$ | mäßig | o |
| > 10 | unzureichend | - |

Im weiteren werden die Folien auf ihrer erfindungsgemäßen Seite auf einer Rotova-Druckmaschine mit wasserlöslicher Farbe bedruckt. Nach einer Wartezeit von 24 h wird die Farbverankerung mit Hilfe eines Klebebandes (z.B. Beiersdorf Tesafilm Nr. 133) getestet. Dieses Klebeband wird auf die bedruckte Folie geliebt. Nach Abziehen des Klebebandes von der Folie kann die Farbverankerung beurteilt werden. Das Klebeband wird ähnlich wie beim vorherigen Beispiel des Verklebungstests senkrecht zur Folie abgezogen.

Wird am Klebeband nach Abzug von der bedruckten Folie keine oder nur sehr wenig Farbe festgestellt, so ist die Farbhaftung auf der Folie sehr gut. Bleibt die Farbe fast vollständig am Klebeband haften, so ist die Farbhaftung unzureichend. Hier wird eine Klassifizierung anhand der mit Farbe bedeckten Fläche auf dem Klebestreifen durchgeführt.

Folgende Beurteilungsmaßstäbe werden herangezogen:

| Anteil der Fläche mit Farbe auf Testband | Beurteilung | Codierung |
|---|---|---|
| > 20 % | unzureichend | - |
| 20 - 10 % | mittel | o |
| 10 - 5 % | gut | + |
| 5 - 0 % | sehr gut | ++ |

Die Erfindung soll anhand der folgenden Beispiele näher erläutert werden.

## Beispiel 1

Eine biaxial gereckte Polypropylenfolie mit einer Dicke von 15 µm, wird auf einer Folienseite einer Plasmavorbehandlung unterzogen.

Die Folie besitzt gemäß ihres Anforderungsprofils für den Kaschiereinsatz eine interne Ausrüstung mit Antiblockmittel (synthetisch hergestellte Kieselsäure), mit Antistatika (ethoxilierte Fettsäureamide) und mit Gleitmittel (Erucasäureamid).

Die Vakuumanlage wird nach dem Einbau der Folie auf einen Druck von $10^{-5}$ mbar evakuiert. Anschließend wird in die Anlage Sauerstoff $O_2$ im Bereich der Kathode zugegeben, so daß sich der gewünschte Druck von 0,05 mbar einstellt. Nach Zünden des Plasmafeldes kann zwischen Folie und Kathode ein leuchtendes Feld mit einem Dunkelraum erkannt werden. Bei eingestellten Spannungen (gleichgerichtete Wechselspannung) vom 700 V, und eine spezifische Leistung von $P_{spez.}= 0,3$ Ws/cm$^2$, wurde die Plasmavorbehandlung durchgeführt.

Die Ergebnisse sind in der Tabelle zusammengefaßt.

## Beispiel 2

Es wurde eine 20 µm dicke coextrudierte, biaxial gereckte Folie aus isotaktischem Polypropylen mit zwei heißsiegelfähigen Propylen-Ethylen-Copolymeren einer Plasmavorbehandlung unterzogen. Die heißsiegelfähigen Schichten sind je 1 µm dick und bestehen aus etwa 4 Gew.-% statistisch verteiltem Ethylen in 96 Gew.-% Propylen. Die Schichten enthalten die für die Weiterverarbeitung wichtigen Additive wie Antiblockmittel (Siliziumdioxyd), Gleitmittel (Erucasäureamid) und Antistatika (ethoxiliertes Fettsäureamin). Hierbei werden die Vorbehandlungsdaten aus Beispiel 1 übernommen - siehe auch Tabelle.

Die leicht höhere Kratzempfindichkeit, die in diesem Beispiel festgestellt wird, wird nicht auf die Plasmavorbehandlung, sondern auf die insgesamt höhere Empfindlichkeit dieser Siegelschicht zurückgeführt. Diese Siegelschicht besitzt aufgrund ihres 4 %igen Ethylenanteiles eine höhere Empfindlichkeit als zum Beispiel reines Homo-Polypropylen.

## Vergleichsbeispiele

Als **Vergleichsbeispiel 1** sollen hier Folien der Wolff Walsrode AG mit den Typenbezeichnungen

Walothen® 0 15 SZ  einschichtige BOPP-Folie (nicht siegelbar)
                   beidseitig Corona-vorbehandelt

und als **Vergleichsbeispiel 2**

Walothen® C 20 SE dreischichtige BOPP-Folie (beidseitig siegelbar)
                  einseitig Corona-vorbehandelt

herangezogen werden

## Vergleichsbeispiel 3

Die Folie aus Beispiel 1 wurde einer Plasmavorbehandlung bei einer Spannung von 300 V und einer spezifischen Leistung von 0,3 Ws/cm², unterzogen.

Vergleichsbeispiel 4

Die Folie aus Beispiel 1 wurde nun einer Plasmavorbehandlung ausgesetzt, die bei einer Spannung von 1 500 V und der gleichen spezifischen Leistung von 0,3 Ws/cm² unterzogen, unter sonst gleichen Bedingungen.

**Tabelle**

| Beispiel 1 | Aufbau der Folie | Bedingung der Plasmavorbehandlung | | Verklebbarkeit | Kratzunempfindlichkeit | Bedruckbarkeit wäßrige Druckfarben |
| --- | --- | --- | --- | --- | --- | --- |
| | | Spannung [kV] | eingebrachte spezifische Leistung [WS/cm²] | | | |
| 1. BOPP-Folie | 1-schichtig | 0,7 | 0,3 | ++ | ++ | ++ |
| 2. BOPP-Folie mit zwei siegelfähigen Schichten | 3-schichtig | 0,7 | 0,3 | ++ | + | ++ |
| Vergleichsbeispiele | | | | | | |
| 1. Walothen O 15 SZ® | 1-schichtig | nur Corona-Vorbehandlung | entfällt | ÷ | ++ | ÷ |
| 2. Walothen C 15 SE® | 3-schichtig | nur Corona-Vorbehandlung | entfällt | ÷ | + | 0 |
| 3. PP-BOPP-Folie | 1-schichtig | 0,4 | 0,3 | ÷ | ++ | 0 |
| 4. PP-BOPP-Folie | 1-schichtig | 1,5 | 0,3 | ++ | ÷ | ++ |

++ = sehr gut
+ = gut
0 = mittel
÷ = unzureichend

**Patentansprüche**

1. Verfahren zur Herstellung von hochpolaren, kratzunempfindlichen Polyolefinfolien mittels Plasmavorbehandlung, die mindestens monoaxial gereckt sind, dadurch gekennzeichnet, daß als Kathodenmaterial Titan eingesetzt wird, daß die angelegte Spannung 400 bis 800 V, vorzugsweise 500 bis 700 V, beträgt, wobei die Spannung eine Wechselspannung oder eine pulsierende Gleichspannung ist, daß die Behandlung der Folie in einer Sauerstoffatmosphäre oder nicht-metalloxidhaltigen Atmosphäre, sowie deren Mischungen mit Edelgasen, bei Drücken von 0,01 bis 0,5, vorzugsweise 0,03 bis 0,42 mbar erfolgt.

2. Verfahren gemäß Anspruch 1, dadurch gekennzeichnet, daß die Polyolefinfolien extrudiert, mindestens monoaxial verstreckt wurden und aus einer oder mehreren Schichten und aus einem oder verschiedenen Polyolefinen bestehen.

3. Verfahren gemäß Anspruch 1 oder 2, dadurch gekennzeichnet, daß die Folien heißsiegelbare, biaxial gereckte Polypropylenfolien sind.

4. Verfahren gemäß einem der Ansprüche 1 bis 3, dadurch gekennzeichnet, daß die Vorbehandlung auf biaxial gereckten Polypropylenfolien erfolgt, die auf der nicht vorbehandelten Folienseite eine Thermokaschierschicht tragen, die durch Druck und Wärme mit Karton bzw. Papier verliebt werden können, wobei die Dicke der Thermokaschierschicht 3 bis 30 μm beträgt.

5. Verwendung einer Folie hergestellt nach einem der Ansprüche 1 bis 4 zur Herstellung von Verpackunngsmaterial.